Europäisches Patentamt

European Patent Office

Office européen des brevets

(19)

(11) Veröffentlichungsnummer : **0 072 016**
**B1**

(12) **EUROPÄISCHE PATENTSCHRIFT**

(45) Veröffentlichungstag der Patentschrift :
06.05.87

(21) Anmeldenummer : 82107183.4

(22) Anmeldetag : 09.08.82

(51) Int. Cl.⁴ : **B 26 D  7/26, A 01 F  29/00,
A 01 F  29/16, G 01 B  7/14**

(54) **Das Spiel zwischen der Scherstange und den relativ zu dieser bewegbaren Schneidelementen einer Schneideinrichtung überwachende Einrichtung.**

(30) Priorität : **10.08.81 US 291589**

(43) Veröffentlichungstag der Anmeldung :
**16.02.83 Patentblatt 83/07**

(45) Bekanntmachung des Hinweises auf die Patenterteilung : **06.05.87 Patentblatt 87/19**

(84) Benannte Vertragsstaaten :
**AT BE CH DE FR GB IT LI NL SE**

(56) Entgegenhaltungen :
**DE-A- 2 326 805
DE-A- 2 505 369
DE-A- 2 943 828
DE-A- 2 943 837
US-A- 3 641 431
US-A- 3 769 666
US-A- 4 063 167
US-A- 4 176 396
US-A- 4 223 302**

(73) Patentinhaber : **DEERE & COMPANY
1 John Deere Road
Moline Illinois 61265 (US)**

(72) Erfinder : **Kolegraff, Kenneth John
511, Hillcrest Road
Waterloo Iowa 50701 (US)**
Erfinder : **Allen, David Thomas
3725 Viking Road
Waterloo Iowa 50701 (US)**

(74) Vertreter : **Fricke, Joachim, Dr. et al
Dr. R. Döring, Dr. J. Fricke, Patentanwälte Josephspitalstrasse 7
D-8000 München 2 (DE)**

EP 0 072 016 B1

**Beschreibung**

Die Erfindung betrifft eine das Spiel zwischen der Scherstange und einem mehrere Schneidmesser aufweisenden, gegenüber der Scherstange beweglichen Schneidkopfes messende Einrichtung mit den Merkmalen des Oberbegriffs des Anspruchs 1.

Aus der dieser Patentschrift zugrunde liegenden Anmeldung sind Teilanmeldungen hervorgegangen, die unter den Nummern 172 466, 172 467 und 173 105 veröffentlicht worden sind, und deren Ansprüche sich auf Bestandteile dieser Beschreibung beziehen.

Eine solche Einrichtung ist aus der DE-A-2 943-828 bekannt. Bei dieser sind Annäherungsfühler in Ausnehmungen der Scherstange eingesetzt, die ein Magnetfeld erzeugen, welches durch die sich vorbei bewegenden Schneidmesser des Schneidkopfes verändert wird. Das durch den Annäherungsfühler erzeugte Signal wird einem Auswertekreis zugeführt, in welchem das Signal während der Durchlaufzeit integriert und mit voreingestellten Schwellwerten verglichen wird. Eine Detektoreinrichtung erfaßt den größten Wert den integrierten Signals und erzeugt ein dem Minimalen Abstand zwischen der Scherstange und den Schneidmessern proportionales Signal. Dieses wird durch ein Meßeinstrument zur Anzeige gebracht. Weiter wird der mittlere Abstand zwischen den Messern und der Scherstange dadurch festgestellt, daß die Ausgangsspannung der Integrationseinrichtung einem Tiefpaßfilter zugeführt wird dessen Ausgangssignal ebenfalls an dem Meßinstrument zur Anzeige gebracht wird. Es ist ein weiterer Detektor vorgesehen, der mit dem Ausgang der Integrationseinrichtung über eine Abtast- und Halteschaltung verbunden ist, um den größten Abstand zwischen den Messern und der Scherstange festzuhalten. Dabei werden über diese Schaltung die Abstände aller aufeinanderfolgender Messer in Form eines abgestuften Signals wiedergegeben. Auf diese Weise ist es möglich, daß mit der bekannten Einrichtung die unterschiedlichen Abstände der verschiedenen Messer des Schneidkopfes sowie bei einem einzelnen Messer Abstandsänderungen entlang der Messerlänge erfaßt werden. Insgesamt können der Abstand des den geringsten Abstand aufweisenden Messers, der Abstand des den größten Abstand aufweisenden Messers, der mittlere Abstand aller Messer und ggf. bei Einsatz mehrerer Meßfühler die Änderung des Abstandes entlang der Länge eines Messers bestimmt werden. Die Anzeige der Abstände erfolgt dabei unabhängig von der Drehgeschwindigkeit, unabhängig von der Anzahl der Messer, unabhängig von der Messerabnutzung und unabhängig von der Messergeometrie. Die Einrichtung kann eingesetzt werden, um während des Betriebes eine Nachstellung der Messer und damit die Aufrechterhaltung günstiger Schneidbedingungen zu gewährleisten.

Es ist Aufgabe der Erfindung eine Einrichtung mit den Merkmalen des Oberbegriffs des Anspruchs 1 so weiterzubilden, daß auf einfache Weise der Fahrer aufmerksam gemacht wird, wenn an einer einem Schneidmesser zugeordneten Stelle des Schneidkopfes eine besondere Abweichung des Abstandes auftritt, die z. B. durch Beschädigung oder Bruch oder durch falsche Einstellung oder durch übermäßige Abnutzung einer Klinge verursacht sein kann.

Diese Aufgabe wird durch die Maßnahmen des Anspruchs 1 gelöst. Durch diese Maßnahmen wird dem Fahrer ein Fehlersignal zugeliefert, immer dann, wenn die Signale von aufeinanderfolgenden Schneidmessern um einen vorbestimmten Wert differieren, d. h., wenn beispielsweise eine unbeschädigte oder intakte Klinge einer abgenutzten, abgebrochenen oder falsch eingestellten vorangegangenen Klinge folgt.

Der Auswertekreis ist dabei besonders zweckmäßig gemäß der Lehre des Anspruchs 2 ausgebildet, der es ermöglicht auf einfache Weise das gewünschte Fehlersignal aus den normalen Fühlersignalen abzuleiten.

Die Erfindung wird nachfolgend anhand schematischer Zeichnungen näher erläutert.

Es zeigen :

Figur 1   eine schematische Gesamtansicht der Einrichtung gemäß der Erfindung mit Draufsicht auf die zugehörigen Schneidmesser, die Scherstange und den Annäherungsfühler.

Figur 2   in größerem Maßstabe einen Querschnitt entlang der Schnittlinie II-II der Figur 1 ;

Figur 3   ein Schaltdiagramm des gesamten Fühl-, Auswertungs- und Anzeigekreises ;

Figur 4   ein detailliertes Schaltbild eines Auswertungskreises, wie er für jeden Annäherungsfühler vorgesehen ist ;

Figur 5   eine grafische Darstellung der Impulsformen von Signalen an verschiedenen Stellen des Schaltkreises und

Figur 6, 7 und 8   weitere Schaltdiagramme von Kreisen, die wahlweise an den Kreis nach Fig. 4 angeschlossen werden können.

Bei der nachfolgenden Beschreibung wird davon ausgegangen, daß die Futtererntemaschine eine Schneideinrichtung 10 aufweist, welche eine Scherstange 12 sowie vier rotierende Schneidköpfe 14a, 14b, 14c und 14d aufweist. Jeder Schneidkopf weist seinerseits mehrere Messer oder Klingen 13 auf. Entsprechend den vier Schneidköpfen sind bei der neuen Überwachungseinrichtung auch vier Annäherungsfühler 16a, 16b, 16c und 16d vorgesehen. Jeder Annäherungsfühler ist in einer Bohrung angeordnet, die sich durch die Scherstange 12 erstreckt.

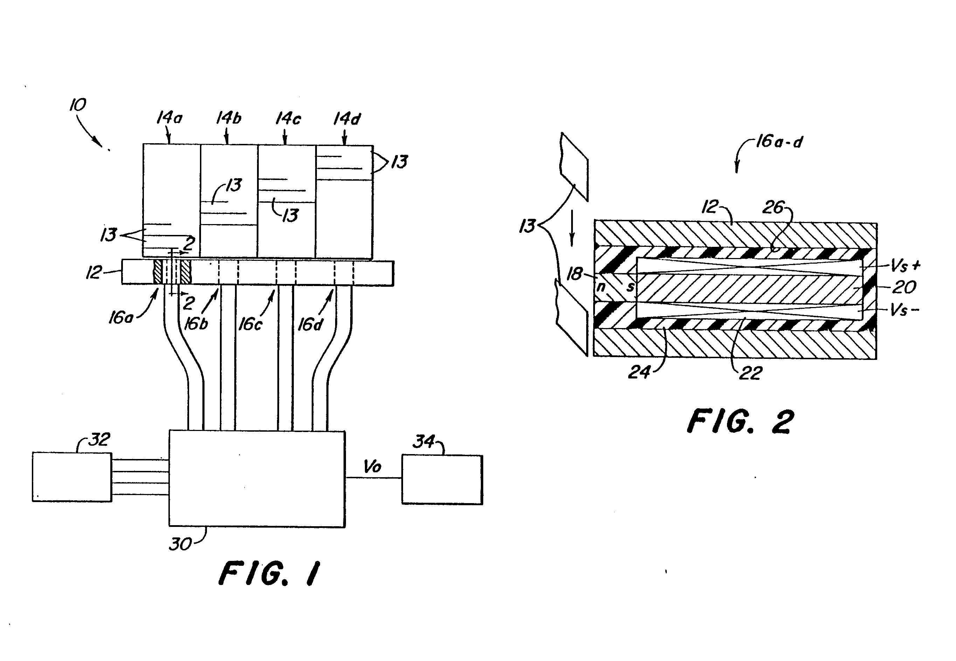

Wie am Besten aus Fig. 2 hervorgeht umfaßt jeder Annäherungsfühler 16 einen Permanentmagneten 18, der an einem Ende einer ferromagnetischen oder magnetisch leitenden Stange 20 angeordnet ist. Eine Fühlerwicklung 22 umgibt die Stange 20 koaxial. Der Magnet 18 und die Stange 20 sind in einem hohlen zylindrischen Kunststoffgehäuse 24 angeordnet, das einer Bohrung 26 in der Scherstange 12 befestigt ist. Das äußere Ende des Magneten 18 liegt vorzugsweise bündig mit der Stirnfläche der Scherstange 12, und zwar an der den Klingen 13 zunächst gelegenen Stelle. Die Bewegung jeder Klinge 13 vorbei an dem Annäherungsfühler 16 führt zur Erzeugung eines elektrischen Signals Vs, das als Spannung über den Anschlüssen der Wicklung 22 auftritt.

Wie aus Fig. 1 hervorgeht sind die Ausgangsanschlüsse der vier Annäherungsfühler in einem Monitorkreis verbunden. In Abhängigkeit vom Zustand eines durch die Bedienungsperson zu betätigenden Schaltmoduls 32, das in einer für die Bedienungsperson zugänglichen Stellung, z. B. in der Fahrerkabine (nicht gezeigt) nahe der Schneideinrichtung 10 montiert ist, kann der Monitorkreis 30 Ausgangssignale erzeugen, welche eine Information bezüglich des Abstandes zwischen Messer und Scherstange von einem oder mehreren ausgewählten Schneidköpfen 14a, 14b, 14c und 14d enthält. Diese Information wird für den Fahrer durch eine Anzeigetafel 34 angezeigt. Diese umfaßt ein Analogmeßgerät oder eine digitale Anzeige sowie Lampen oder andere Anzeigevorrichtungen.

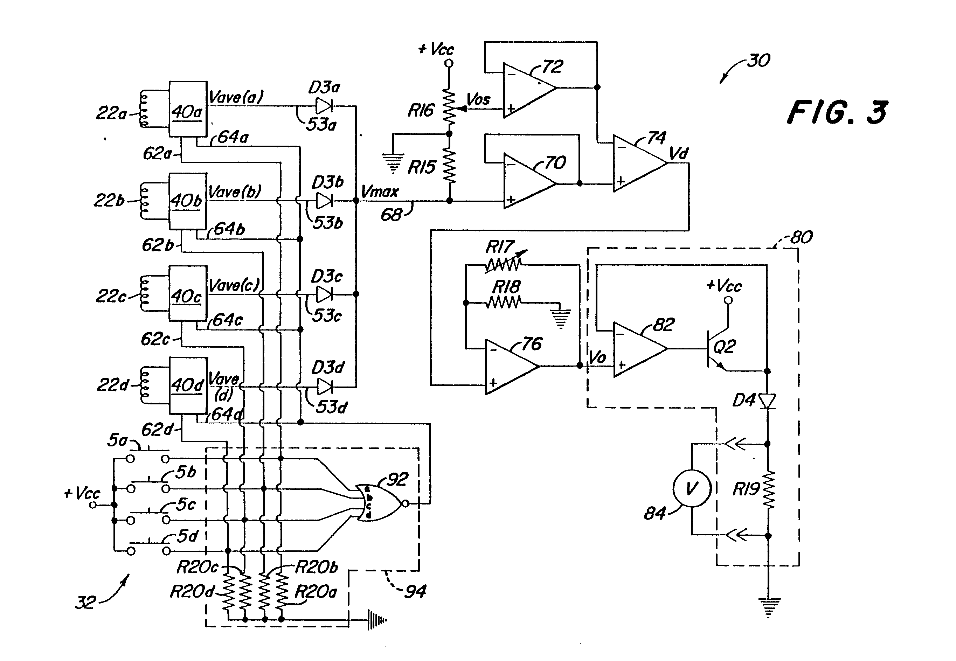

Der Monitorkreis 30 umfaßt nach Fig. 3 vier identische Signalauswertungskreise 40a, 40b, 40c und 40d. Jeder dieser Auswertungskreise ist an die Wicklungsanschlüsse eines zugehörigen Annäherungsschalters angeschlossen.

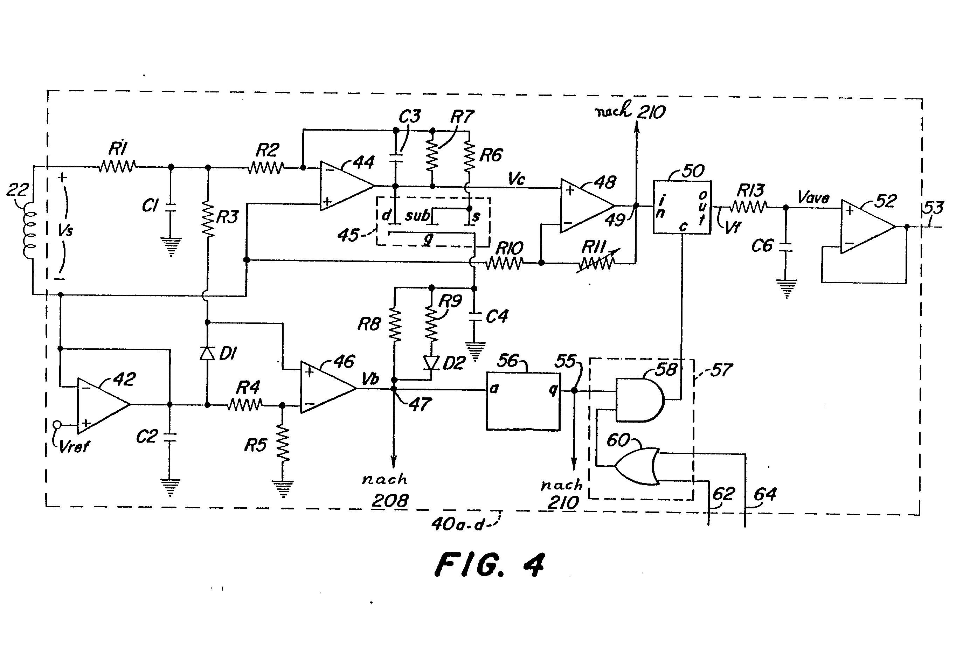

Aus Fig. 4 ist ersichtlich, daß jeder Auswertungskreis 40 einen Widerstand R1 aufweist, der mit einem Anschluß der Fühlerwicklung und an die gemeinsamen Anschlüsse der Widerstände R2 und R3 sowie über einen Filterkondensator C1 verbunden ist. Der andere Anschluß der Fühlerwicklung 22 ist mit dem Ausgang und mit dem (—)-Eingang eines Trennverstärkers 42 und mit dem (+)-Eingang eines Arbeitsverstärkers 44 verbunden. Der (+)-Eingang des Verstärkers 42 ist mit einer Bezugsspannung Vref von z. B. 1,2 Volt Gleichspannung verbunden.

Der Ausgang des Verstärkers 42 ist über einen Kondensator C2 geerdet und mit der Anode einer Diode D1 und mit dem (—)-Eingang eines Komparators 46 über Widerstand R4 verbunden. Die Katode der Diode D1 ist mit dem anderen Anschluß des Widerstandes R3 und mit dem (+)-Eingang des Komparators 46 verbunden. Der (—)-Eingang des Komparators 46 ist seinerseits über Widerstand R5 geerdet. Der andere Anschluß des Widerstandes R2 ist mit dem (—)-Eingang des Verstärkers 44 verbunden. Der (—)-Eingang des Verstärkers 44 ist außerdem mit dem Quell-(S) und Substratanschlüssen (SUB) eines Feldtransistors (FET) 45 über Widerstand R6 verbunden. Der (—)-Eingang und der Ausgang des Verstärkers 44 sind miteinander durch einen Widerstand R7 und einen parallel dazu liegenden Integrationskondensator C3 verbunden. Der Ausgang des Verstärkers 44 ist außerdem mit dem Abflußanschluß (D) des Feldtransistors 45 und mit dem (+)-Eingang eines Verstärkers 48 mit variablem Verstärkungsfaktor verbunden.

Das Gatter (G) des Feldtransistors 45 ist über einen Kondensator C4 geerdet und über einen Widerstand R8 mit einem Anschluß 47 verbunden, der seinerseits mit dem Ausgang eines Komparators 46 verbunden ist. Das Gatter (G) des Feldtransistors 45 ist außerdem mit der Anode einer Diode D2 über Widerstand R9 verbunden. Die Katode dieser Diode D2 ist an den Anschluß 47 gelegt.

Ein Widerstand R10 liegt zwischen der Bezugsspannung am Auslaß des Trennverstärkers 42 und dem (—)-Eingang des Verstärkers 48. Dieser umfaßt einen variablen Widerstand R11 zwischen dem Anschluß 49 und seinem (—)-Eingang. Durch Veränderung des Widerstandes R11 kann der Verstärkungsfaktor des Verstärkers 48 verändert werden, um eine Anpassung an Variationen der Signalstärke an den Annäherungsfühlern 16a, 16b, 16c und 16d aufgrund von Veränderungen in den Annäherungsfühlern selbst bzw. aufgrund Veränderungen ihrer Montagestellung zu ermöglichen.

Der Ausgang des Verstärkers 48 ist mit dem Anschluß 49 und mit dem Eigangsanschluß eines CMOS-Schalters verbunden. Der Ausgangsanschluß dieses Schalters 50 ist mit dem (+)-Eingang eines Trennverstärkers 52 mit konstantem Verstärkungsfaktor über Widerstand R13 verbunden. Der (+)-Eingang des Trennverstärkers 52 ist über einen zur Bildung eines Mittelwertes dienenen Kondensators C6 geerdet. Der (—)-Eingang des Trennverstärkers 52 ist an seinen Ausgang angeschlossen. Die hohe Impedanz des Trennverstärkers 52 verhindert, daß der Kondensator C6 durch die Ausgangsleitung 53 des Auswertungskreises 40 entladen wird.

Der Anschluß 47 ist mit dem A-Eingang eines monostabilen Multivibrators 56 verbunden. Der Multivibrator 56 erzeugt einen relativ kurzen positiven oder Bereitschaftsimpuls am Q-Ausgang, wobei der Impuls ein wenig kürzer als 1 Millisekunde dauert. Dabei wird der Multivibrator durch den von einem niedrigen zu einem hohen Wert laufenden Übergang am Ausgang des Komparators 46 ausgelöst.

Der Q-Ausgang des Multivibrators 56 ist an den Anschluß 55 und an den Eingang des UND-Gatters 58 eines logischen Kreises 57 angeschlossen. Der andere Eingang des Gatters 58 ist mit dem Ausgang eines ODER-Gatters 60 verbunden. Steuerschaltleitungen 62 und 64 sind an die Eingänge des Gatters 60 angeschlossen. Der Ausgang des UND-Gatters 58 ist mit dem Kontrolleingang C des COMS-Schalters verbunden. Der Schalter ist so lange offen, so lange der Ausgang des Gatters 58 einen niedrigen Wert aufweist und er ist geschlossen, wenn der Ausgang am Gatter 58 einen hohen Wert besitzt.

Aus Fig. 3 geht hervor, daß die Ausgangsleitungen 53a-53d der Auswertungskreise 40a bis 40d jeweils mit der Anode einer zugehörigen Diode D3a-D3d angeschlossen ist. Die Katoden der Dioden D3a-D3d sind zusammengeschlossen und mit dem (+)-Eingang eines Trennverstärkers 70 mit konstantem Verstärkungsfaktor über die Leitung 68 verbunden. Der (+)-Eingang des Verstärkers 70 ist über den Widerstand R15 geerdet.

Eine veränderbare Offset-Spannung Vos wird von einem Potentiometer R16 abgegriffen, das zwischen einer Spannungsquelle + Vcc (beispielsweise von + 8 Volt Gleichstrom) und Erde liegt. Diese Offset-Spannung wird an den (+)-Eingang eines Trennverstärkers 72 mit festem Verstärkungsfaktor angelegt. Der Ausgang der Trennverstärker 70 und 72 ist mit deren jeweiligem (—)-Eingang verbunden.

Die Spannungen Vmax und Vos werden den (+)- bzw. (—)-Eingängen eines Differentialverstärkers 74 mit konstantem Verstärkungsfaktor zugeführt. Die Ausgangsspannung Vd des Differentialverstärkers 74 wird an den (+)-Eingang eines Verstärkers 76 mit variablem Verstärkungsfaktor angelegt, dessen Verstärkungsfaktor beispielsweise zwischen 1 und 6 durch Veränderung des variablen Widerstandes R17 eingestellt werden kann, der zwischen dem (—)-Eingang und dem Ausgang des Verstärkungsfaktors 76 liegt. Der (—)-Eingang des Verstärkers 76 ist über Widerstand R18 geerdet.

Die Ausgangsspannung Vo des Verstärkers 76 ist mit einem Meßtreiberkreis 80 verbunden. Dieser umfaßt einen Arbeitsverstärker 82, dessen (+)-Eingang mit dem Ausgang des Verstärkers 76 verbunden ist. Der Ausgang des Verstärkers 82 ist mit der Basis eines 2N222-Transistors Q2 verbunden. Der Kollektor dieses Transistors ist mit der Spannungsquelle + Vcc verbunden. Der Emitter des Transistors ist mit dem (—)-Eingang des Operationsverstärkers 82 und mit der Anode der Diode D4 verbunden. Die Katode dieser Diode D4 ist über Widerstand R19 an Erde gelegt. Ein übliches, analog arbeitendes Voltmeter 84 liegt parallel zu dem Widerstand R19. Es wäre auch möglich eine digitale Anzeigeeinrichtung (nicht gezeigt) anstelle des Voltmeters 84 vorzusehen, wenn das Ausgangssignal Vo durch entsprechende Analog/Digital-Wandler umgeformt wird.

Das Schaltmodul 32 ist vorzugsweise in der Fahrerkabine montiert und umfaßt vier Schalter 5a-5d. Eine Seite jedes Schalters ist mit der Spannungsquelle + Vcc verbunden. Die andere Seite jedes Schalters 5a-5d ist mit dem jeweiligen Eingang eines NOR-Gatters 92 eines logischen Kreises 94 verbunden. Die Eingänge des Gatters 92 sind über identische Widerstände R20a-R20d mit Erde verbunden. Die Eingänge des Gatters 92 sind außerdem mit Steuerleitungen 62a-62d von logischen Kreisen 57 der Auswertungskreise 40a-40d verbunden. Der Ausgang des Gatters 92 ist mit Steuerleitungen 64a-64d des logischen Kreises 57 verbunden.

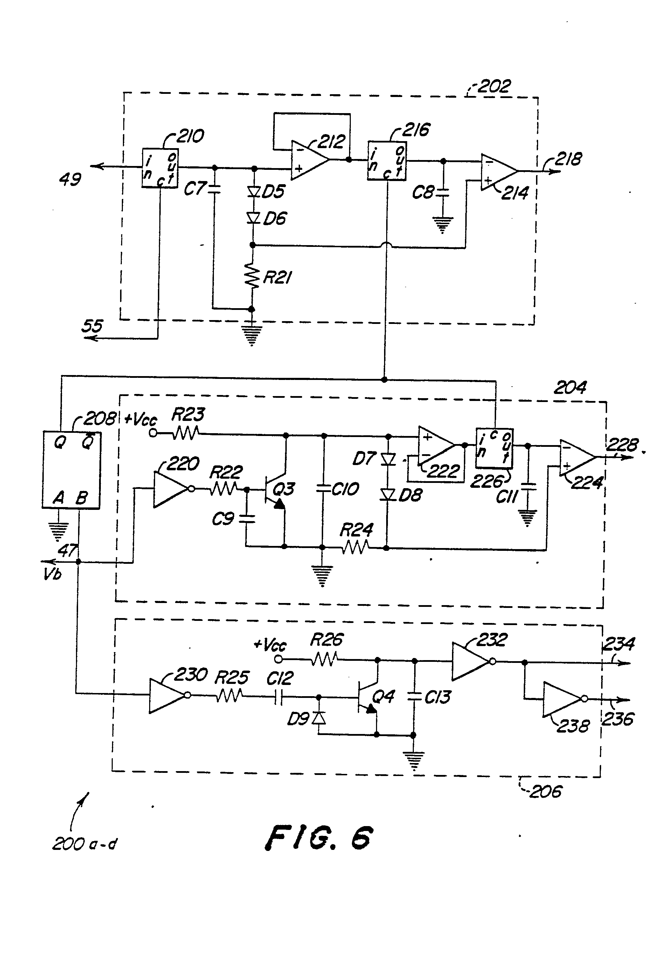

Falls gewünscht, kann jeder der vier Auswertungskreise 40a-40d mit einem korrespondierenden Kreis von vier identischen Kreisen 200a-200d verbunden werden, von denen einer beispielsweise in Fig. 6 gezeigt ist. Jeder dieser Kreise 200a-200d umfaßt eine Detektorerinheit 202 für abgenutzte oder verstellte Klingen, eine Detektoreinheit 204 für fehlende oder gebrochene Klingen und eine Einheit 206, welche feststellt, ob korrespondierende Annäherungsfühler 16a-16d wirkungslos geworden sind.

Jeder der Kreise 200a-200d umfaßt einen monostabilen Multivibrator 208 mit einem geerdeten A-Eingang und einem B-Eingang, der mit dem Anschluß 47 des Auswertungskreises 40 zur Aufnahme der Spannungs Vb verbunden ist.

Der Multivibrator 208 erzeugt an seinem Q-Ausgang einen positiven Impuls, dessen Dauer gleich der Dauer der Arbeitsperiode des Multivibrators 56 des Auswertungskreises 40 ist, und zwar in Abhängigkeit von dem Übergang von hohen Werten auf niedrige Werte der Spannung Vb.

Jede Einheit 202 umfaßt einen CMOS-Schalter 210 mit einem Eingangsanschluß der mit dem Anschluß 49 des Auswertungskreises 40 verbunden ist, um die verstärkte integrierte Kondensatorspannung Vc zu empfangen. Der Kontrolleingang C des Schalters 210 ist mit dem Anschluß 55 des Auswertungskreises 40 verbunden. Der Ausgangsanschluß des Schalters 210 ist mit Erde über einen Auswahlkondensator C7 verbunden. Der Ausgang des Schalters 210 ist außerdem mit dem Eingang eines Trennverstärkers 212 mit einheitlichem Verstärkungsfaktor und mit der Anode der ersten (D5) von zwei in Reihe geschalteten Dioden D5 und D6 verbunden. Die Katode der Diode D6 ist über Widerstand R21 geerdet und mit dem (+)-Eingang des Komparators 214 verbunden. Der Ausgang des Trennverstärkers 212 ist mit dem Eingangsanschluß des CMOS-Schalters 216 verbunden, dessen Steuer-C-Einlaß mit dem Q-Auslaß des monostabilen Multivibrators 208 verbunden ist.

Der Ausgangsanschluß des Schalters 216 ist über einen Auswahlkondensator C8 geerdet und mit dem (—)-Einlaß des Komparators 214 verbunden. Der Trennverstärker 212 liefert eine Isolation zwischen den Auswahlkondensatoren C7 und C8, um zu verhindern, daß die Spannung des Kondensators C8 die Spannung am Kondensator C7 beeinflußt.

Jede Einheit 204 umfaßt einen Invertor 220, dessen einer Einlaß mit dem Anschluß 47 des Auswertungskreises 40 zur Aufnahme der Spannung Vb verbunden ist. Der Auslaß des Invertors 220 ist mit der Basis eines Transistors Q3 über den Widerstand R22 verbunden. Die Basis dieses Transistors ist über den Kondensator C9 geerdet. Der Emitter des Transistors Q3 ist geerdet, während der Kollektor mit der Spannungsquelle + Vcc über den Widerstand R23, mit dem (+)-Eingang des Trennverstärkers 222 von festem Verstärkungsfaktor und über Kondensator C10 mit Erde verbunden ist. Der Kollektor des Transistors Q3 ist mit der Anode von zwei in Reihe liegenden Dioden D7 und D8 verbunden. Die Katode der Diode D8 ist über Widerstand R24 geerdet und mit dem (+)-Eingang des Komparators 224 verbunden. Der Ausgang des Trennverstärkers 222 ist mit seinem (—)-Einlaß verbunden sowie mit dem Einlaßan-

schluß eines weiteren CMOS-Schalters 226. Der Steueranschluß C des Schalters 226 ist mit dem Q-Ausgang des monostabilen Multivibrators 208 verbunden. Der Ausgangsanschluß des Schalters 226 ist über den Auswahlkondensator C11 geerdet und ist mit dem (—)-Einlaß des Komparators 224 verbunden. Der Auslaß dieses Komparators ist mit der Ausgangsleitung 228 verbunden.

Jede Einheit 206 umfaßt einen Invertor 230, der mit dem Anschluß 47 zum Empfang der Spannung Vb verbunden ist. Der Ausgang des Invertors 230 ist mit der einen Seite eines Kondensators C12 über Widerstand R25 verbunden. Die andere Seite des Kondensators C12 ist mit der Basis eines Transistors Q4 und mit der Katode der Diode D9 verbunden. Die Anode dieser Diode und der Emitter des Transistors sind geerdet. Der Kollektor des Transistors Q4 ist mit der Spannungsquelle Vcc über Widerstand R26, mit Erde über den Kondensator C13 und mit dem Einlaß eines Umkehr-Schmitt-Triggers 232 verbunden. Der Auslaß dieses Triggers 232 ist mit der Ausgangsleitung 234 und über Invertor 238 mit einer Ausgangsleitung 236 verbunden.

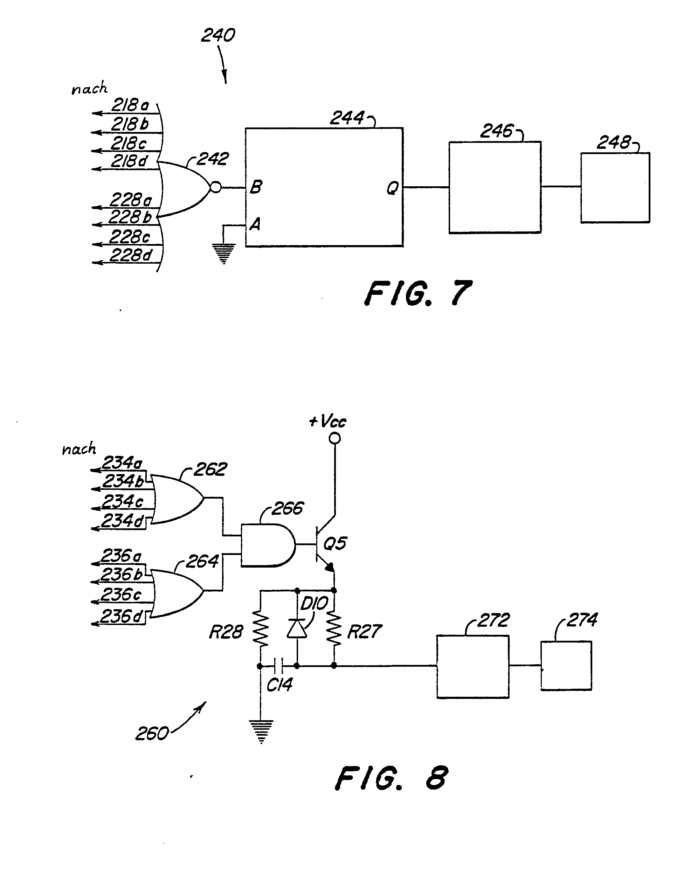

Die Ausgangsleitungen 218, 228, 234 und 236 der Kreise 200a-200d sind mit entsprechenden Einlässen der Kreise 240 und 260 nach Fig. 7 und 8 jeweils verbunden.

Der Kreis 240 nach Fig. 7 umfaßt ein NOR-Gatter 242 mit mehrfachen Eingängen. Vier dieser Eingänge sind mit entsprechenden Ausgangsleitungen 218a-218d der Einheiten 202a-202d der Kreise 200a-200d verbunden. Weitere vier der Eingänge des Gatters sind mit entsprechenden Ausgangsleitungen 228a-228d der Einheiten 204a-204d der Kreise 200a-200d verbunden. Der Ausgang des Gatters 242 ist mit dem B-Eingang eines monostabilen Multivibrators 244, dessen A-Einlaß geerdet ist. Der Multivibrator 244 erzeugt einen positiven Impuls von vorbestimmter Dauer an dem Ausgang Q in Abhängigkeit von den Übergängen von hohen Werten nach niedrigen Werten an dem B-Eingang. Der Q-Ausgang ist mit einem Lampentreiberkreis 246 verbunden. Hierbei kann es sich um einen Kaskade geschalteten doppelten Transistorstromverstärker handeln, der seinerseits Lampen oder andere Anzeigevorrichtungen 248 an der Anzeigetafel 34 steuert, wenn der Q-Auslaß des Multivibrators 244 den hohen Wert einnimmt.

Der Kreis 260 in Fig. 8 umfaßt ein ODER-Gatter 262. Jeder Einlaß ist über eine korrespondierende Ausgangsleitung 234a-234d mit den Einheiten 206 der Kreise 200a-200d verbunden. Der Kreis 260 umfaßt ein weiteres ODER-Gatter 264, dessen beiden Eingänge mit entsprechenden Ausgangsleitungen 236a-236d der Einheiten 206 der Kreise 200a-200d verbunden sind. Die Auslässe der Gatter 262 und 264 sind mit den Einlässen eines UND-Gatters 266 verbunden, dessen Auslaß an die Basis eines Transistors Q5 angeschlossen ist. Der Kollektor des Transistors ist mit der Spannungsquelle + Vcc verbunden. Der Emitter des Transistors ist mit dem Einlaß eines Lampentreiberkreises 272 verbunden, der ähnlich dem Treiberkreis 246 ausgebildet sein kann. Die Verbindung erfolgt über Widerstand R27 auch mit der Katode einer Diode D10 und über Widerstand R28 mit Erde. Der Einlaß des Treiberkreises 272 ist mit der Anode der Diode D10 und über Kondensator C14 mit Erde verbunden. Ein Schmitt-Trigger kann zwischen R17 und dem Treiberkreis 272 angeordnet sein. Dessen Hysteresis kann eine unstabile Arbeitsweise des Treiberkreises 272 verhindern, wenn die Spannung am Kondensator C14 nahe dem Grenzniveau des Treiberkreises 272 liegt. Der Treiberkreis treibt eine Lampe oder eine andere Anzeigevorrichtung 274 am Anzeigebrett 34.

Es sollte bemerkt werden, daß die Anzeigetafel 34 in Fig. 1, die Lampen und Meßgeräte 84 sowie die Lampen 248 und 274 enthält, so montiert werden kann, daß sie von der Bedienungsperson sichtbar ist, wenn diese sich in ihrer nicht gezeigten Fahrerkabine befindet, so daß das Spiel zwischen den Messern und der Scherstange während der Arbeitsweise der Futtererntemaschine ohne weiteres überwacht werden kann. Es könnte auch wünschenswert sein, die Anzeigeeinrichtung 34 so zu montieren, daß sie auch von einer Stellung sichtbar ist, die der Fahrer einnimmt, wenn er das Spiel der Scherstange nachstellt oder einstellt, z. B. nach einem Schärfen der Messer. Dies wäre z. B. erreichbar mit einer beweglichen Anzeigetafel oder mit getrennten Anzeigetafeln, die so angeordnet sind, daß sie auch von der Einstellposition aus sichtbar sind. In dieser Weise kann die Bedienungsperson oder der Fahrer die Anzeigeeinrichtung dazu benutzten, um beim Einjustieren der Stellung der Scherstange nach dem Schärfvorgang die Meßwerte auszunutzen.

Die Überwachungseinrichtung arbeitet wie folgt :

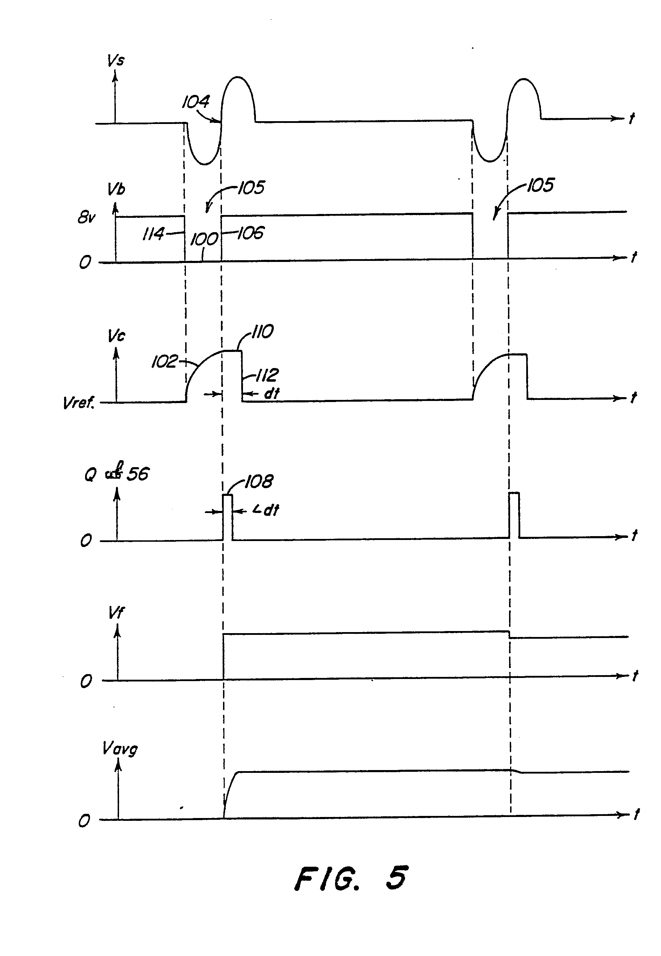

Die Bewegung eines Messers 13 eines der Schneidköpfe 14a-14d in die Nachbarschaft des zugehörigen Annäherungsfühler 16a-16d stört das magnetische Feld, das durch den Permenentmagneten 18 erzeugt ist. Die Veränderung des magnetischen Feldes führt zu einer Fühlerspannung Vs über der Fühlerwicklung 22, wie dies am Besten aus Fig. 5 hervorgeht. Die Polarität dieser Spannung Vs wird dann, wenn die Klinge 13 sich wieder von dem Annäherungsfühler 16 weg bewegt, gegenüber der Polarität während der Annäherung umgekehrt. Die Spannung Vs kehrt daher ihre Polarität um, so daß ihre Größe in Bezug auf eine Bezugsspannung Vref in dem Augenblick neutral ist, wenn der Abstand zwischen der Klinge 13 und dem Annäherungsfühler 16 in einer Richtung entlang der Achse der Wicklung 22 ein Minimum annimmt.

Die normalerweise hohe Spannung Vb am Ausgang des Komparators 46 und an dem Anschluß 47 ist niedrig, wie dies am Punkt 100 in Fig. 5 gezeigt ist, solange die Spannung Vs kleiner ist als die Bezugsspannung Vref. Das niedrige Niveau der Spannung Vb schaltet den Feldtransistor 45 ab, so daß der Verstärker 44 den Integrationskondensator C3 auf einen Wert aufladen kann, wie er bei 102 gezeigt ist.

Es ist wünschenswert, die Fühlerspannung Vs aus folgenden Gründen zu integrieren. Der Spitzenwert der Spannung Vs, der durch den Annäherungsfühler 16 erzeugt wird, ist eine Funktion von dem zu messenden Luftspalt, von der Geschwindigkeit des sich bewegenden Messers und von anderen konstanten Faktoren, z. B. von der Feldstärke des Magneten, von der Anzahl der Windungen der Wicklungen 22, von verschiedenen Impedanzen und auch geometrischen Anordnungen. Beispielsweise besitzt die Spannung Vs bei niedriger Messergeschwindigkeit eine relativ niedrigere Amplitude aber relativ längere Dauer. Umgekehrt weist die Spannung Vs bei höheren Messergeschwindigkeiten eine größere Amplitude aber kürzere Dauer auf. Wenn man jedoch eine zeitabhängige Integration der Spannung Vs vornimmt und ein entsprechendes Signal erzeugt, so ist dieses unabhängig von der Messergeschwindigkeit, da die Fläche unter der Zeit-Spannungs-Kurve Vs in Fig. 5 im wesentlichen lediglich eine Funktion des kleinsten Abstandes oder Spaltes zwischen dem Messer 13 und dem Annäherungsfühler 16. Damit ist die Spannung Vc über den Kondensator C3 eine Integrationsfunktion der Fühlerspannung Vs und ist daher kennzeichnend für den geringsten Abstand zwischen Klinge und Annäherungsfühler.

Wenn die Fühlerspannung Vs durch das Niveau der Bezugsspannung Vref geht, wie dies bei Punkt 104 angedeutet ist, schaltet die Ausgangsspannung Vb von einem niedrigen Wert auf einen hohen Wert, wie dies bei Punkt 106 angedeutet ist. Dieser Übergang der Spannung Vb löst den monostabilen Multivibrator 56 aus. Dieser erzeugt einen Bereitschaftsimpuls von positiver Polarität, dessen Dauer geringfügig kleiner ist als eine Millisekunde. Dies ist bei 108 dargestellt. Dieser Impuls schließt über das UND-Gatter 58 den normalerweise offenen CMOS-Schalter 50 für eine entsprechende Zeitdauer. Wenn der Schalter 50 geschlossen ist, entspricht die Spannung Vf dem Spitzenwert der Spannung Vc. Die Spannung Vf gelangt zu dem Mittelwert-Kondensator C6 und zwar über Widerstand R13. Dadurch wird der Kondensator C6 aufgeladen oder entladen, bis seine Spannung Vave auf exponentielle Weise eine Spannung annähert, die proportional zur Spannung Vc ist. Das bedeutet, daß so viele Klingen auch an dem Annäherungsfühler 16 vorbei laufen die Spannung Vave im wesentlichen proportional zu dem Mittelwert der Spitzengröße der Spannung Vc entspricht, wie dies an Punkt 110 in Fig. 5 angedeutet ist.

Der Übergang von niedrigem Wert zu hohem Wert der Spannung Vb am Punkt 106 der Fig. 5 verursacht eine ähnliche Änderung der Spannung über den Kondensator C4. Diese Veränderung wird jedoch zeitlich verzögert in bezug auf den Übergang bei 106, da der Kondensator C4 nur durch die relativ große Impedanz des Widerstandes R8 aufgeladen werden kann. Dies führt dazu, daß der Feldtransistor 45 eingeschaltet wird, um so die Spannung über den Integrationskondensator C3 zu entladen oder auf Null zu bringen, wie dies bei 112 angedeutet ist, und zwar eine verzögerte Zeit dt gegenüber dem Zeitpunkt, an dem der Übergang von niedrig zu hoch der Spannung Vb erfolgt ist. Der Wiederstand R8 und der Kondensator C4 sind so gewählt, daß die Verzögerungszeit dt größer ist als die Dauer des Impulses 108 des monostabilen Multivibrators 56. Auf diese Weise wird sichergestellt, daß der Schalter 50 geöffnet wird, nachdem man den Kondensator C6 sich hat aufladen lassen, so daß der Spitzenwert der Spannung Vc in adäquater Weise festgehalten ist, jedoch bevor der Integrationskondensator C3 entladen wird, so daß die Spannung Vave über den Kondensator C6 nicht beeinflußt wird, wenn der Kondensator C3 entladen wird. Es wird darauf hingewiesen, daß der Widerstand R9 vorzugsweise eine Impedanz aufweist, die wesentlich kleiner ist als die des Widerstandes R8, so daß der Kondensator C4 sich durch den Widerstand R8 und die Diode D4 rasch entladen kann, um den Feldtransistor 45 in Abhängigkeit von dem Auftreten des Überganges von hoch nach niedrig der Spannung Vb auszuschalten, wie dies bei 114 angedeutet ist.

Unter Bezugnahme auf Fig. 3 wird deutlich, daß jeder Auswertungskreis 40a-40d eine durchschnittliche Ausgangsspannung Vave(a)-(d) in der gerade beschriebenen Weise erzeugt, um einen durchschnittlichen minimalen Spalt zwischen Klinge und Annäherungsfühler der entsprechenden Schneidköpfe 14a-14d zu repräsentieren. Ein Dioden-Netzwerk, das von den Dioden D3a-D3d gebildet wird, erzeugt eine Spannung Vmax auf der Leitung 68, die gleich dem höchten Wert der Spannungen Vave(a)-(d) ist, vermindert um den kleinen Spannungsabfall von 0,7 Volt an der Diode.

Ein Differentialverstärker 74 mit konstantem Verstärkungsfaktor erzeugt eine Differenzspannung Vd, die gleich der Differenz ist zwischen den getrennten Spannungen Vmax und der Offset-Spannung Vos. Die Differenzspannung Vd wird durch einen Verstärker 76 mit veränderlichem Verstärkungsfaktor verstärkt, um eine Ausgangsspannung Vo zu erhalten, die dem Treiberkreis 80 für das Meßgerät 84 zugeleitet wird. Das Meßgerät 84 erzeugt damit ein erkennbares oder wahrnehmbares Signal, das dem durchschnittlichen Abstand zwischen Klinge und Annäherungsfühler des Schneidkopfes oder Schneidsegmentes 14 entspricht, welches die geringste durchschnittliche Trennung zwischen Klinge und Annäherungsfühler zeigt. Durch Veränderung der Offset-Spannung Vos und der Veränderung des Verstärkungsfaktors des Verstärkers 76 kann der Ausgang der Annäherungsfühler 16 an Anzeigegeräte mit unterschiedlichen Arbeitsspannungsbereichen angepaßt werden.

Die vorstehende Beschreibung nimmt an, daß alle Drucknopfschalter 5a-5d offen sind, so daß die CMOS-Schalter 50 in jedem der Auswertungskreise 40a bis 40d durch den monostabilen Multivibrator 56 periodisch geschlossen werden können. Auf diese Weise wird an jeder der Ausgangsleitungen 53a-53d eine durchschnittliche Spannung Vave von Null abweichender Größe vorliegen. In diesem Zustand kann allerdings der Fahrer nicht bestimmen, welches von den Schneidsegmenten 14a-14d durch das am Meßgerät 84 angegebene Signal wiedergegeben wird.

Wenn jedoch der Fahrer eine Überprüfung nur eines bestimmten Schneidelementes, z. B. des Schneidelementes 14a wünscht, braucht er lediglich den Druckknopf 5a niederzudrücken. Dadurch tritt eine Spannung am Eingang des NOR-Gatters 92 und an der Steuerleitung 62a des zugehörigen Auswertungskreises 40 auf, die einen höheren Wert einnimmt, während die Werte in den Steuerleitungen 62b bis 62d der Kreise 40b-40d klein bleibt. Das führt dazu, daß der normalerweise hohe Ausgang des NOR-Gatters 92 auf einen niedrigen Wert umschaltet. Dadurch werden die Steuerleitungen 64a-64d auf einen niedrigen Wert umgeschaltet. Damit sind beide Steuerleitungen 62 und 64 der Kreise 40b-40d niedrig, während die Steuerleitung 62a des Auswertungskreises 40a einen höheren Wert aufweist. Da beide Steuerleitungen 62 und 64 der Auswertungskreise 40b-40d niedrige Werte aufweisen ist der Ausgang am ODER-Gatter 60 niedrig und das UND-Gatter 58 verhindert, daß ein Signal des monostabilen Multivibrators 56 die CMOS-Schalter 50 schließt. Damit wird eine Kommunikation der verstärkten Spannung Vc am Ausgang des Verstärkers 48 zu dem Mittel-wertkondensator C6 verhindert, so daß die Spannungen Vave(b)-(d) der Auswertungskreise 40b-40d im wesentlichen gleich Null bleibt. Da die Steuerleitung 62a des Auswertungskreises 40a einen hohen Wert aufweist, bleibt der Ausgang des ODER-Gatters 60 des Auswertungskreises 40a hoch, so daß nunmehr der Impuls des monostabilen Multivibrators den Schalter 50 über das UND-Gatter periodisch schließt, so daß eine Spannung Vave(a) am Ausgang 53a des Auswertungskreises 40a erscheint, welche nicht den Wert Null aufweist. Die Spannung Vmax in der Leitung 68 repräsentiert somit nur die Spannung Vave(a) und das Meßgerät 84 zeigt einen Wert an, der nur dem Schneidkopf 14a entspricht. In einer ähnlichen Weise kann jede Kombination der Kreise 40a-40d außer Wirkung gesetzt werden, indem eine entsprechende Kombination der Schalter 5a-5d geöffnet oder geschlossen wird. Welche Kreise 40a-40d auch jeweils zur Wirkung gebracht werden, zeigt das Anzeigegerät 84 stets einen Wert, der der durchschnittlichen Trennung zwischen Messer und Annäherungsfühler des Schneidsegmentes wiedergibt, welches dem Schneidsegment mit dem kleinsten Abstand entspricht und zwar bezogen auf die zur Wirkung gebrachten Kreise 40a-40d.

Jede Einheit 202 arbeitet wie folgt :

Die Spannung Vc, die durch die Bewegung der ersten Klinge 13 erzeugt worden ist, wird ausgewählt und von dem Kondensator C7 festgehalten, und zwar ausgelöst durch einen Auslöseimpuls des Q-Ausgangs des monostabilen Multivibrators 56, welcher Impuls bei dem Übergang von niedrig nach hoch der Spannung Vb beginnt. Bei dem nächsten Übergang von hoch nach niedrig der Spannung Vb, verursacht durch die Bewegung der zweiten Klinge 13, schließt der Ausgangsimpuls des monostabilen Multivibrators 208 momentan den CMOS-Schalter 216, so daß die zuerst ausgewählte Spannung auf dem Kondensator C7 auf den Kondensator C8 übertragen und dort festgehalten wird. Die Spannung Vc, die der zweiten Klinge korrespondiert wird dann ausgewählt und am Kondensator C7 festgehalten, und zwar bei dem nächsten Übergang von der Spannung Vb von niedrig nach hoch. Auf diese Weise werden die Spannung Vc7 (vermindert um einen doppelten Diodenspannungsabfall von 1,4 Volt) und die Spannung Vc8, entsprechend der gegenwärtigen Klinge und der vorausgegangenen Klinge, jeweils den (+)- und (—)-Eingängen des Komparators 214 zugeführt. Auf diese Weise ändert sich der normale niedrige Ausgang bei 218 am Komparator 214 nach hohen Werten, immer wenn die Spannung Vc7 größer ist als die vorangegangene Spannung Vc8 plus 1,4 Volt. Dieser Zustand tritt auf, wenn die vorherige Spannung an dem Kondensator C8 in bezug auf die Spannung am Kondensator C7 kleiner ist, was geschieht, wenn eine unbeschädigte Klinge einer abgenutzten oder falsch eingestellten vorhergehenden Klinge folgt.

Jede Einheit 204 arbeitet wie folgt : Während der normalen Arbeitsweise verursachen die Übergänge oder negativen Impulse 105 der Spannung Vb am Ausgang des Komparators 46 jedes Auswertungskreises 40a-40d und die Bereitschaftsimpulse, wie sie in Fig. 5 bei 108 angedeutet sind, ein wechselndes Aufladen und Entladen des Integrationskondensators C3 jedesmal wenn eine Klinge 13 an einem der Annäherungsfühler 16a-16d vorbeiläuft. Diese periodisch auftretenden negativen Impulse der Spannung Vb werden durch den Invertor 220 der Einheit 204 empfangen, um periodisch den Transistor Q3 anzuschalten, wenn der Wert von Vb niedrig ist, so daß der Kondensator C10 periodisch entladen wird. Der Kondensator C10 wird jedoch periodisch über den Widerstand R23 während der Periode aufgeladen, während der der Wert von Vb zwischen den negativen Impulsen von Vb im Abschaltzustand von Q3 groß ist. Vor jedem Entladevorgang des Kondensators C10 wird seine Spannung durch den Kondensator C11 über den Schaltvorgang des CMOS-Schalters 226 und den monostabilen Multivibrator 208 in einer Weise festgehalten ähnlich wie dies mit den aufeinanderfolgenden Spannungssignalen durch die Kondensatoren C7 und C8 in der Einheit 202 geschieht. Nachdem die Spannung des Kondensators C10 auf den Kondensator C11 übertragen und der Kondensator C10 entladen ist, schaltet der Übergang von niedrig nach hoch der Spannung Vb den Transistor Q3 ab und gestattet es, daß der Kondensator C10 erneut auf eine neue Spannung aufgeladen wird. Auf diese Weise werden die alte Spannung auf dem Kondensator C11 und die neue Spannung an dem Kondensator C10 (vermindert um zwei Diodenabfälle von 1,4 Volt) mit Hilfe des Komparators 224 verglichen, dessen normalerweise niedriger Ausgang bei 228 auf hohe Werte nur dann übergeht, wenn die neue Spannung am Kondensator C10 (abzüglich 1,4 Volt) größer als die alte Spannung an dem Kondensator C11. Wenn keine negativen Impulse von der Spannung Vb fehlen, dann verhindert das periodische Entladen des Kondensators C10 die neue Spannung daran, daß sie hoch genug wird, um den Ausgang des Komparators 224 nach oben zu schalten. Wenn jedoch ein negativer Impuls der Spannung Vb durch den Komparator 46 aufgrund irgend einer Fehlfunktion nicht erzeugt wird, z. B. wenn eine Klinge vollständig fehlt oder mehrere gebrochene Klingen vorliegen oder eine elektrische Fehlfunktion auftritt, dann wird der Transistor Q3 nicht eingeschaltet. In diesem Fall setzt sich die Aufladung des Kondensators C10 fort und es entsteht eine neue Spannung, die ggf. größer wird als die alte Spannung am Kondensator C11 zuzüglich 1,4 Volt. Auf diese Weise wird der Ausgang des Komparators 224 nach hohen Werten in Abhängigkeit von dieser Fehlfunktion geschaltet.

Der Kreis 240 arbeitet wie folgt : Während der normalen Vorgänge sind alle Eingänge 218a-218d und 228a-228d, die zu dem NOR-Gatter 242 führen, niedrig. Der Ausgang dieses Gatters weist einen hohen Wert, der Q-Ausgang des monostabilen Multivibrators 244 hat einen niedrigen Wert und die Lampe oder Anzeigeeinrichtung 248 ist in ihrem inaktiven Zustand. Wenn jedoch irgend eine der Klingen 13 abgenutzt, falsch eingestellt, fehlt oder gebrochen ist, dann nimmt der Betreffende der Eingänge 218a-218d und 228a-228d einen hohen Wert an, und zwar aufgrund der Funktionen der zuvor beschriebenen Einheiten 202 und 204. Wenn irgend einer der Eingänge des Gatters 242 den hohen Wert annimmt, dann verändert sich der Ausgang des Gatters von hoch nach niedrig. Dadurch wird ein Impuls von ausgewählter Dauer von dem Q-Ausgang des monostabilen Multivibrators 244 ausgelöst. Dieser Impuls veranlaßt den Treiberkreis 246 die Lampe oder die Anzeigeeinrichtung 248 zu aktivieren und eine sichtbare Anzeige oder ein anderes wahrnehmbares Signal zu erzeugen, um so die Bedienungsperson zu warnen, daß eine abgenutzte, eine falsch eingestellte oder ein Zustand von fehlender Klinge oder gebrochener Klinge vorliegt.

Jede Einheit 206 und der zugehörige Kreis 260 arbeiten wie folgt : Wenn die Spannung Vb einen hohen Wert aufweist, ist der Transistor Q4 abgeschaltet und der Kondensator C13 lädt sich langsam über die relativ hohe Impedanz des Widerstandes R26 auf. Während der normalen Arbeitsweise wird jedoch der Kondensator C13 periodisch durch den Transistor Q4 entladen, der in Abhängigkeit von den negativen Impulsen der Spannung Vb gemäß 105 in Fig. 5 entladen wird. Dadurch wird verhindert, daß der Kondensator C13 so hoch geladen wird, daß er den Schmitt-Trigger 232 auslöst. Während der normalen Arbeitsweise bleiben somit alle Ausgangsleitungen 234a-234d der Kreise 200a-200d auf hohen Werten und alle Ausgangsleitungen 236a-236d der Kreise 200a-200d auf niedrigen Werten. Während alle Leitungen 234a-234d hohe Werte führen, ist der Ausgang der ODER-Gatters 262 hoch. Wenn alle Leitungen 236a-236d niedrig sind, ist der Ausgang des ODER-Gatters 264 niedrig. In diesem Zustand ist der ODER-Gatter 264 niedrig und das UND-Gatter 266 hoch, so daß der Transistor Q5 abgeschaltet und der Treiberkreis 272 für die Lampe 274 ausgeschaltet ist.

Wenn jedoch wenigstens einer der Annäherungsfühler 16a-16d nicht in Wirkung ist, während zur gleichen Zeit wenigstens ein anderer der Annäherungsfühler 16a-16d in Funktion ist, dann fehlt ein negativer Impuls Vb, und zwar von dem inaktiven Annäherungsfühler. Das bedeutet, daß die Ausgangsleitungen 234 und 236 jeweils niedrige bzw. hohe Werte annehmen für die betreffende Einheit 206, die dem nicht wirkungsvollen Annäherungsfühler zugeordnet ist, da der Kondensator C13 dieser Einheit 206 nicht mehr periodisch durch den negativen Impuls Vb entladen wird. Die übrigen Kreise 206, die den funktionsfähigen Annäherungsfühlern zugeordnet sind, bleiben an ihren Ausgangsleitungen 234 und 236 in den jeweils normalen hohen und niedrigen Zuständen. Das bedeutet, daß jedesmal dann, wenn eine Mischung von sowohl aktiven als inaktiven Annäherungsfühlern 16a-16d vorliegt, auch eine Mischung von niedrigen und hohen Eingängen bei beiden ODER-Gattern 262 und 264 des Kreises 260 vorliegt. Dies führt dazu, daß die Ausgänge beider ODER-Gatter 262 und 264 und der Ausgang des UND-Gatters 266 hohe Werte einnehmen, wodurch der Transistor Q5 eingeschaltet wird. Wenn dieser Zustand für eine genügend lange Zeit fortbesteht, kann sich der Kondensator C14 auf eine Spannung aufladen die groß genug ist, um den Treiberkreis 272 für die Lampe oder die Anzeigeeinrichtung 274 einzuschalten und so die Bedienungsperson von diesem Zustand Kenntnis zu geben. Da dieser Zustand vorübergehend existieren kann, wenn die Maschine anfänglich gestartet wird, ist die Zeitkonstante des Zeitverzögerungskreises R27, C14 ausreichend groß, um zu verhindern, daß dieser vorübergehende Zustand die Lampe 274 aktiviert.

Es wird ferner bemerkt, daß dann, wenn die Maschine gestoppt wird, so daß keines der Messer 13 sich bewegt, keiner der Komparatoren 46 oder Auswertungskreise 40a-40d irgend einen negativen Impuls Vb an der Stelle 105 der Figur 5 erzeugt. Das bedeutet, daß alle Ausgangsleitungen 234 der Einheiten 206 einen niedrigen Wert und alle Ausgangsleitungen 236 der Einheiten 206 einen hohen Wert einnehmen. Es wird nun Bezug genommen auf Fig. 8. Dieser Zustand bedeutet, daß alle Eingänge zu dem ODER-Gatter 262 einen niedrigen Wert und alle Eingänge des ODER-Gatters 264 einen hohen Wert besitzen, wodurch an dem UND-Gatter 266 Signale von hohem bzw. niedrigem Niveau erzeugt werden.

Während dieses Abschaltzustandes bleibt somit der Ausgang des UND-Gatters 266 niedrig. Das bedeutet, daß der Transistor Q5, der Treiberkreis 272 und die Anzeigeeinrichtung 274 inaktiv bleiben. Damit arbeiten die Einheiten 206 und der Kreis 260 zusammen, um ein Warnsignal zu erzeugen, wenn einer oder einige aber nicht alle der Annäherungsfühler 16a-16d arbeiten, jedoch die Erzeugung eines irreführenden Warnsignals verhindern, wenn alle Annäherungsfühler 16a-16d inaktiv sind, und zwar wegen fehlender Rotation der Schneidköpfe 10.

Es ist ersichtlich, daß die verschiedenen Funktionen der oben beschriebenen Überwachungseinrichtungen mit entsprechend programmierten Mikroprozessoren bestückt werden können sowie mit üblichen Analog/Digital-Konvertoren, welche die analogen Vave-Signale in Digital-Signale umwandeln. Durch die Erfindung soll diese Möglichkeit mit umfaßt sein.

## Patentansprüche

1. Das Spiel zwischen der Scherstange (12) und mindestens einem mehrere Schneidmesser (13) aufweisenden, gegenüber der Scherstange (12) beweglichen Schneidkopf (14a, 14b, 14c, 14d) messende Einrichtung, die einen Annäherungsfühler (16) für den oder jeden Schneidkopf aufweist, welcher an der Scherstange (12) angeordnet ist und eine Folge von Annäherungssignalen (Vs) erzeugt, von denen ein jedes die Annäherung eines der aufeinanderfolgenden Schneidmesser (13) an die Scherstange (12) wiedergibt ; welche ferner einen die Annäherungssignale (Vs) empfangenden Auswertekreis (40a-40d) für jeden Annäherungsfühler (16) aufweist, der ausgewählte Werte des Spiels zwischen Scherstange (12) und dem Schneidmesser (13) mit Hilfe einer Anzeigeeinrichtung (34) zur Anzeige bringt, dadurch gekennzeichnet, daß der Auswertekreis (40a-40d) einen Detektorkreis (202) für abgenutzte oder verstellte Schneidmesser (13) mit einem Komparator (214) aufweist, der den Annäherungssignalen (Vs) entsprechende Signale (Vc) von aufeinanderfolgenden Schneidmessern (13) miteinander vergleicht und ein Fehlersignal erzeugt, wenn die Signale (Vc) von aufeinanderfolgenden Schneidmessern (13) um einen vorbestimmten Wert differieren.

2. Einrichtung nach Anspruch 1, dadurch gekennzeichnet, daß der Auswertekreis (40a-40d) eine Prüf- und Halteeinrichtung (210, C7) zum Festhalten von Signalen (Vc) aufweist, welche die Größe von aufeinanderfolgenden Annäherungssignalen (Vs) wiedergeben, sowie eine Einrichtung (D5, D6), der die Signale (Vc) zugeführt werden, um ein Signal zu erzeugen, dessen Größe gegenüber dem Eingangssignal reduziert ist, wobei dem ersten Eingang des Komparators (214) das Ausgangssignal der Prüf- und Halteeinrichtung (210, C7) verzögert um einen Annäherungsimpuls (216, C8) und dem zweiten Eingang des Komparators das unverzögerte Signal von reduzierter Größe zugeführt wird und dieser ein Warnsignal erzeugt, wenn zwei aufeinanderfolgende Annäherungssignale sich um einen durch eine Diodenkette (D5, D6) vorgegebenen Betrag unterscheiden.

## Claims

1. An apparatus for measuring the clearance between the shearing bar (12) and at least one cutting head (14a, 14b, 14c, 14d) which has a plurality of cutting blades (13) and which is movable with respect to the shearing bar (12), which apparatus has a proximity detector (16) for the or each cutting head and which is arranged on the shearing bar and generates a series of proximity signals (Vs), each of which reproduces the approach of one of the successive cutting blades (13) to the shearing bar (12) ; and which further has an evaluation circuit (40a-40d) for each proximity detector (16), which circuit receives the proximity signals (Vs) and displays selected values of the clearance between the shearing bar (12) and the cutting blade (13) by means of a display device (34), characterised in that the evaluation circuit (40a-40d) has a detector circuit (202) for worn or maladjusted cutting blades (13), with a comparator (214) which compares together signals (Vc), corresponding to the approach signals (Vs), of successive cutting blades (13), and generates a fault signal if the signals (Vc) of successive cutting blades (13) differ by a predetermined value.

2. Apparatus according to claim 1 characterised in that the evaluation circuit (40a-40d) has a test and hold means (210, C7) for holding signals (Vc) which reproduce the magnitude of successive proximity signals (Vs), and a means (D5, D6) to which the signals (Vc) are fed to generate a signal whose magnitude is reduced with respect to the input signal, wherein the first input of the comparator (214) receives the output signal of the test and hold means (210, C7) delayed by a proximity pulse (216, C8) and the second input of the comparator receives the undelayed signal of reduced magnitude and same generates a warning signal if two successive proximity signals differ from each other by an amount which is predetermined by a diode chain (D5, D6).

## Revendications

1. Dispositif mesurant le jeu entre la tige de cisaillement (12) et au moins une tête de coupe (14a, 14b, 14c, 14d) mobile par rapport à la tige de cisaillement (12), comportant plusieurs lames de coupe (13), qui comporte un détecteur de proximité (16) pour la ou chaque tête de coupe, disposé sur la tige de cisaillement (12) et engendrant une séquence de signaux de proximité (Vs) dont chacun traduit le rapprochement de l'une des lames de coupe (13) successives de la tige de cisaillement (12), comportant en outre un circuit d'exploitation (40a-40d) pour chaque détecteur de proximité (16), recevant les signaux de proximité (Vs), qui assure l'indication de valeurs sélectionnées du jeu entre la tige de cisaillement (12) et la lame de coupe (13) à l'aide d'un dispositif indicateur (34), caractérisé en ce que le circuit d'exploitation (40a-40d) comporte un circuit de détection (202) pour des lames (13) détériorées par l'usure ou déréglées, comportant un comparateur (214) qui compare mutuellement des signaux (Vc), correspondant aux signaux de proximité (Vs), de lames (13) successives et engendre un signal d'erreur, lorsque les signaux (Vc) de lames (13) successives diffèrent d'une valeur prédéterminée.

2. Dispositif suivant la revendication 1, caractérisé en ce que le circuit d'exploitation (40a-40d) comporte un dispositif de contrôle et de retenue (210, C7) pour retenir des signaux (Vc) qui traduisent la grandeur de signaux de proximité (Vs) successifs, ainsi qu'un dispositif (D5, D6) auquel sont transmis les signaux (Vc) pour engendrer un signal dont la grandeur est réduite par rapport au signal d'entrée, la première entrée du comparateur (214) recevant le signal de sortie du dispositif de contrôle et de retenue (210, C7), retardé d'une impulsion de proximité (216, C8) et la seconde entrée du comparateur recevant le signal non retardé de grandeur réduite et engendrant un signal d'avertissement lorsque deux signaux de proximité successives diffèrent d'une valeur absolue prédéterminée par un montage-série de diodes (D5, D6).

FIG. 2

FIG. 1

FIG. 3

*FIG. 4*

FIG. 5

4

0 072 016

FIG. 6

200 a-d

FIG. 7

FIG. 8